# EUROPEAN PATENT APPLICATION

(11) **EP 2 544 436 A1**
(43) Date of publication of application: **09.01.2013**
(21) Application number: 12174980.8
(22) Date of filing: 04.07.2012
(51) Int. Cl.: H04M 1/725

(54) **Interface device for mobile communication terminal and method thereof**

(30) Priority: 04.07.2011 KR 20110065935
(71) Applicant: Samsung Electronics Co., Ltd., Suwon-si, Gyeonggi-do, 443-742 (KR)
(72) Inventor: WHANG, Yu-Shik, Seoul (KR)
(74) Representative: Jenkins, Richard Gavin

(57) **Abstract**

An interface device is provided for a mobile communication terminal for persons who may be elderly, blind or have compromised vision. The interface device includes a directional key for navigating an object in a corresponding region, a controller for determining texts or contents corresponding to the object in the corresponding region, a converter for converting the texts or the contents corresponding to the object in the corresponding region into voice, and a speaker for outputting the converted voice corresponding to the object in the corresponding region.

## Description

### BACKGROUND OF THE INVENTION

### 1. Field of the Invention

The present invention relates to an interface for a mobile communication terminal.

### 2. Description of the Related Art

A variety of wireless communication services using a wireless network have been provided based on the rapid development of computer, electronic, and communication technologies. Therefore, the service provided from a mobile communication system using a wireless network has developed beyond a voice service and into a multimedia communication service for transmitting such data as circuit and packet data.

In addition, a smart phone for combining functions of a mobile communication terminal with functions of a Personal Digital Assistant (PDA) has seen recent development. The smart phone is equipped with a high-capacity memory and a high-performance Central Processing Unit (CPU) in comparison with a conventional mobile communication terminal. The smart phone includes an Operating System (OS) which supports execution of a variety of applications, voice/data communication, and Personal Computer (PC) interworking.

The smart phone provides a visual interface based on a touch screen. A user of the smart phone touches a position of a corresponding display and generates an input event while the display is provided on the touch screen.

However, it is difficult for persons who are elderly, blind or have compromised vision, to use the smart phone in a visual interface environment. For example, a blind person cannot see a touch screen display of the smart phone, and therefore is limited when selecting a menu or executing an application.

Accordingly, there is a need in the art for an interface device for a mobile communication terminal or a smart phone for persons who are elderly, blind or have compromised vision.

### SUMMARY OF THE INVENTION

Accordingly, the present invention has been made to solve at least the above-mentioned problems and/or disadvantages and to provide at least the advantages described below. Accordingly, an aspect of the present invention is to provide an interface device for a mobile communication terminal for blind people and a method thereof.

In accordance with an aspect of the present invention, an interface device for a mobile communication terminal includes a directional key for navigating an object in a corresponding region, a controller for determining texts or contents corresponding to the object in the corresponding region, a converter for converting the texts or the contents corresponding to the object in the corresponding region into voice, and a speaker for outputting the converted voice corresponding to the object in the corresponding region.

In accordance with another aspect of the present invention, an interface method of a mobile communication terminal includes navigating an object in a corresponding region using a directional key, determining texts or contents corresponding to the object in the corresponding region, converting the texts or the contents corresponding to the object in the corresponding region into voice, and outputting the converted voice corresponding to the object in the corresponding region.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates a configuration of a smart phone according to an embodiment of the present invention;
FIG. 2 illustrates a configuration of a display on which an application is executed in a smart phone according to an embodiment of the present invention;
FIG. 3 to FIG. 6 illustrate display examples of a smart phone according to the present invention;
FIG. 7 illustrates a configuration of an interface device for a mobile communication terminal according to an embodiment of the present invention; and
FIG. 8 illustrates an interface method of a mobile communication terminal according to an embodiment of the present invention.

### DETAILED DESCRIPTION OF EMBODIMENTS OF THE INVENTION

Embodiments of the present invention are described in detail with reference to the accompanying drawings. The same or similar components may be designated by the same or similar reference numerals throughout the drawings. Detailed description of constructions or processes known in the art may are omitted for the sake of clarity and conciseness.

The present invention relates to a user interface device capable of recognizing all body contents shown on a display using a combination of two upper and lower directional keys and one selection key and Text-To Speech (TTS) technology in a full-touch device (e.g., a touch smart phone and a touch phone) having a touch screen as an input device, and a method thereof.

The present invention will be described based on a smart phone. However, the present invention may be applied to other devices having a touch screen as an input device.

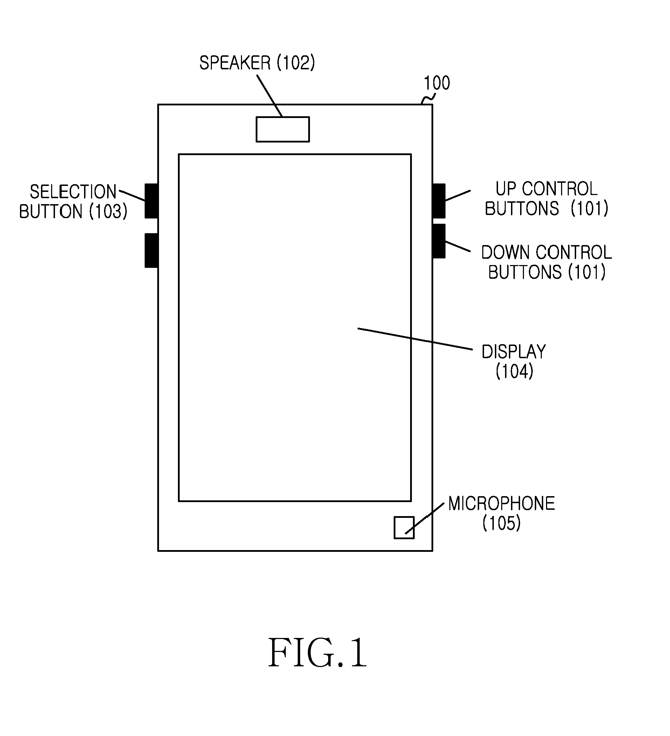

FIG. 1 illustrates a configuration of a smart phone according to an embodiment of the present invention.

Referring to FIG. 1, when a user navigates objects outputted on a display 104 through up/down control buttons 101, texts (or contents for each object) corresponding to each object are converted into voice, which is outputted through a speaker 102 (hereinafter a Text to Speech (TTS) function) to provide an audible indication of the texts. The display 104 is classified into a plurality of regions including a plurality of objects. The object is a concept that includes data (e.g., an image and a text) and an operation (e.g., a procedure, a method, and a function) related to the data.

The user selects a desired object using a selection button 103 with reference to the voice outputted through the speaker 102. Accordingly, a person who is blind or has limited eyesight may also perform a corresponding function by recognizing contents for a display through the voice without viewing the smart phone display.

On the other hand, the user may input a voice using a Speech To Text (STT) function for converting the voice into a text.

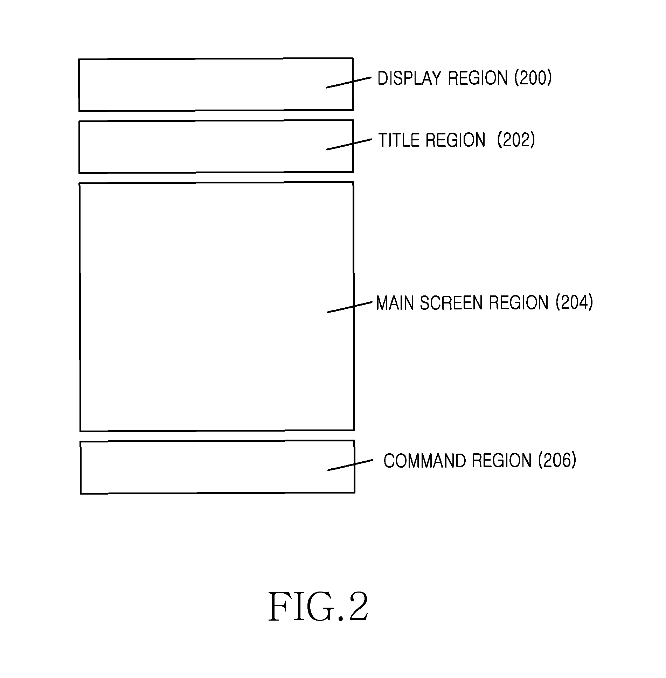

FIG. 2 illustrates a configuration of a display on which an application is executed in a smart phone according to an embodiment of the present invention.

Referring to FIG. 2, an application display of a smart phone is classified into a display region 200, a title region 202, a main screen region 204, and a command region 206.

The display region 200 includes objects for displaying signal strength as an image or a number, current time, the remaining capacity of a battery as an image or a number, and alarm setting as an image. The display region 200 may further include objects for displaying an image of a warning when a problem occurs during smart phone use, a currently run application during multitasking, and a vibration or bell sound setting. Otherwise, a corresponding object may or may not be displayed on the display region 200 according to execution of a corresponding application.

Each of the objects displayed on the display region 200 displays basic information to the user and does not have a linked operation. For example, although the user selects the object for displaying current time of the display region 200, the user may not change or correct the current time.

The title region 202 displays a variety of information items, such as an object for displaying a title for an application displayed on a current display, and an object for displaying information of a current page among a plurality of display pages. A plurality of objects that assist in the input of a corresponding application may appear on the title region 202.

The main screen region 204 outputs a variety of information items such as a telephone number list and a text message list, or outputs icons for executing a plurality of applications. The main screen region 204 is variously implemented according to applications.

The command region 206 includes control/navigation objects such as a play, a delete, a next page movement, and a back page movement. In accordance with its implementation, the command region 206 includes frequently used application icon objects.

The title region 202 or the command region 206 may be omitted according to a corresponding application, and positions of the title region 202 and the command region 206 may be changed.

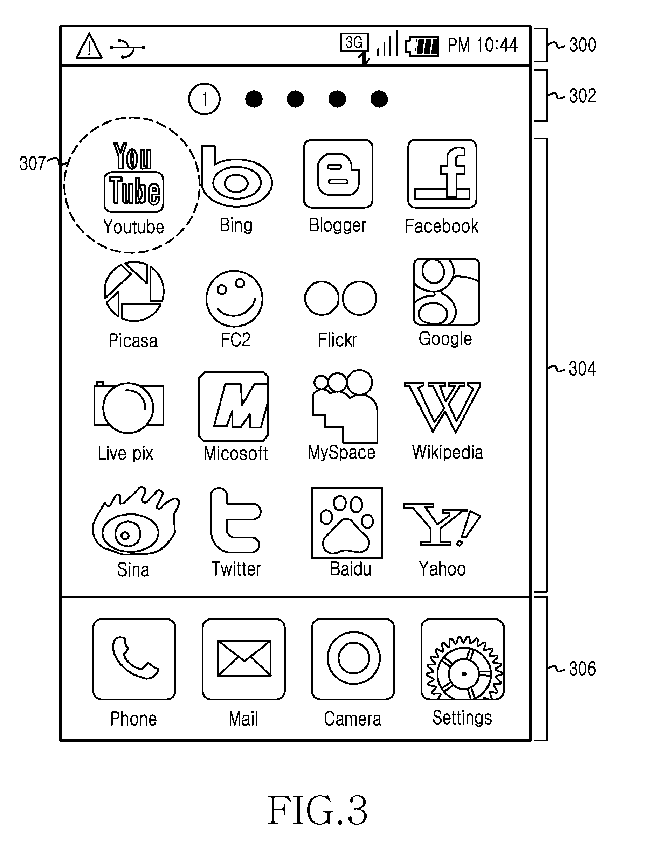

FIG. 3 illustrates a display example of a smart phone according to an embodiment of the present invention.

Referring to FIG. 3, a main display of the smart phone is classified into a display region 300, a title region 302, a main screen region 304, and a command region 306. Each of the regions includes a plurality of objects.

For example, objects for warning insufficiency of a battery, indicating that a sub-memory is installed in the smart phone, displaying a state in which a 3G network is connected, displaying signal strength, displaying the remaining capacity of the battery, and displaying current time, appear from the left to the right of the display region 300.

An object for displaying information of a current main display page among a plurality of main display pages appears on the title region 302. For example, FIG. 3 illustrates a first main display among a total of 5 main display pages.

Icon objects for executing a plurality of applications appear on the main screen region 304.

A call connection application, a phone book search application, a message searching/sending application, and a home object for converting a current display into a main display appear from left to right on the command region 306.

Since it is virtually impossible for a blind person to verify a display of a smart phone through sight, the present invention provides an audible interface to the blind person using the upper and lower control buttons 101 and the selection button 103 of FIG. 1 and the Text To Speech (TTS) function, which is for converting text into voice.

Although the blind person does not verify a display of the smart phone, he or she may move among a plurality of objects that appear on a corresponding region using the upper and lower control buttons 101. For example, if a user initially pushes the upper and lower control buttons 101, a first object (e.g., a warning object) of the display region 300 is focused. Texts or contents (e.g., "low battery") for the corresponding warning object are converted into voice, which is output through the speaker 102 of FIG. 1.

If the user pushes the upper control button 101 once, the focus is moved to the right of the display region 300, that is, texts or contents (e.g., "the sub-battery is mounted in the smart phone") for the object for indicating that the sub-memory is mounted in the smart phone are converted into voice which is output through the speaker 102.

In the same manner, if the user pushes the upper control button 101 once more, the focus is moved to the right of the display region 300, that is, texts or contents (e.g., "the 3G network is connected") for the object for displaying the state in which the 3G network is connected are converted into voice which is output through the speaker 102. Texts or contents (e.g., "there are four stages of the strength of radio waves now") for the object for displaying signal strength are converted into voice, which is output through the speaker 102. Texts or contents (e.g., "the remaining capacity of the battery is 70% now") for the object for displaying the remaining capacity of the battery are converted into voice, which is output through the speaker 102.

Texts or contents (e.g., "the present time is 10:44 p.m.") for the object for displaying current time are converted into voice, which is output through the speaker 102. However, if the user pushes the lower control button 101, the focus is moved from right to left on the display region 300. For example, when the object for displaying signal strength is focused, if the user pushes the lower control button 101, the focus is moved to the object for displaying the state in which the 3G network is connected.

If the user initially pushes the upper and lower control buttons 101, a certain region of a plurality of regions may be focused according to settings or random values instead of the display region 300. For example, if the user initially pushes the upper and lower control buttons 101, focus may begin from the main screen region 304 or the command region 306.

However, if voice output for the objects of the display region 300 is completed by the upper and lower control buttons 101, voice is output to indicate that the voice output for the objects of the display region 300 is ended. This voice output is audible to the user. If the user pushes the upper and lower control buttons 101 twice consecutively, or double-clicks the upper and lower control buttons 101, the focus is moved to the title region 302.

If the user pushes the upper and lower control buttons 101 twice consecutively before the voice output for the objects of the display region 300 is completed, or if the user double-clicks the upper and lower control buttons 101, the focus may be moved to the title region 302.

In the same manner, consider that the voice output for the objects of the display region 300 has ended. If the user pushes the upper and lower control buttons 101 twice consecutively, or double-clicks the upper and lower control buttons 101, the focus may be moved to the title region 302. In this case, the title region 302 remains the same although the user pushes the selection button 103. Because an object of the title region 302 displays current display page information of the smart phone, no particular operation occurs although the user pushes the selection button 103.

In the same manner, consider that voice output for the objects of the title region 302 has ended. If the user pushes the upper and lower control buttons 101 twice consecutively, or double-clicks the upper and lower control buttons 101, the focus may be moved to a first object (e.g., a Youtube icon (307)) of the left of the main screen region 304.

The user moves from a left application object to a right application object one by one using the upper and lower control buttons 101. When a text for a "T store" application icon object is output as a voice (that is, focus is on the "T store" application icon object), the user may execute a "T store" application using the selection button 103.

In the same manner, consider that voice output for the objects of the main screen region 304 has ended. If the user pushes the upper and lower control buttons 101 twice consecutively, or double-clicks the upper and lower control button 101, the focus may be moved to a first object (e.g., the object related to call connection) of the left of the command region 306.

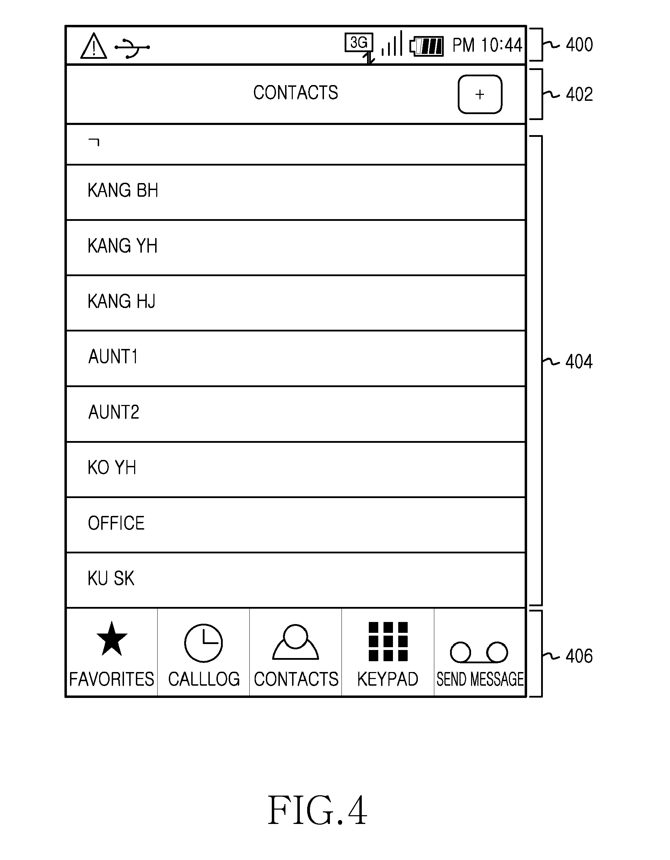

FIG. 4 illustrates a display example of a smart phone according to another embodiment of the present invention.

Referring to FIG. 4, a main display of the smart phone is classified into a display region 400, a title region 402, a main screen region 404, and a command region 406 as in FIG. 3. Each of the regions includes a plurality of objects.

A user controls voice output for objects which are positioned on the display region 400, the title region 402, the main screen region 404, and the command region 406 as in FIG. 3 using the upper and lower control buttons 101 of FIG. 1.

As shown in FIG. 4, if "contacts" of the title region 402 is output as a voice, that is, if it is informed that contents of a contact information database will be listed on the main screen region 404, a focus is moved to the main screen region 404. A name of a corresponding user is output as a voice on the listed contact information.

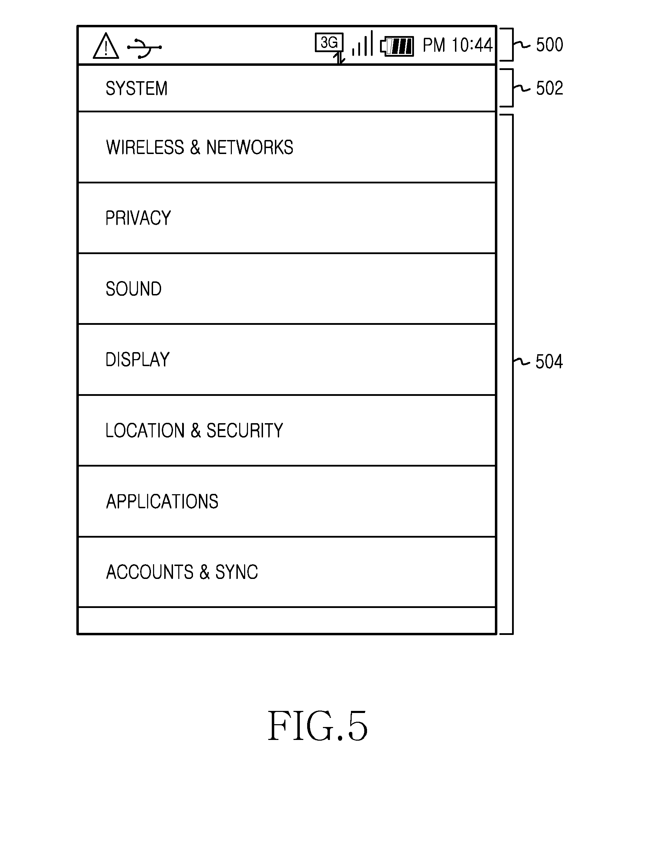

FIG. 5 illustrates a display example of a smart phone according to another embodiment of the present invention.

Referring to FIG. 5, a display of the smart phone is classified into a display region 500, a title region 502, and a main screen region 504. Each of the regions includes a plurality of objects. However, a command region is not included, unlike FIG. 3 and FIG. 4.

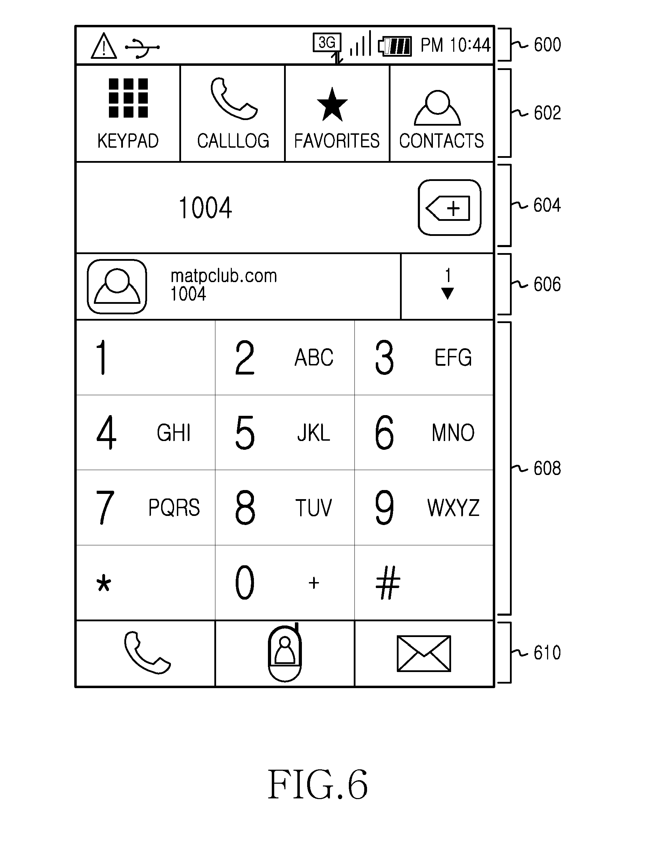

FIG. 6 illustrates a display example of a smart phone according to another embodiment of the present invention.

Referring to FIG. 6, a display of the smart phone is classified into additional regions 604 and 606 in addition to a display region 600, a title region 602, a main screen region 608, and a command region 610. Each of the regions includes a plurality of objects.

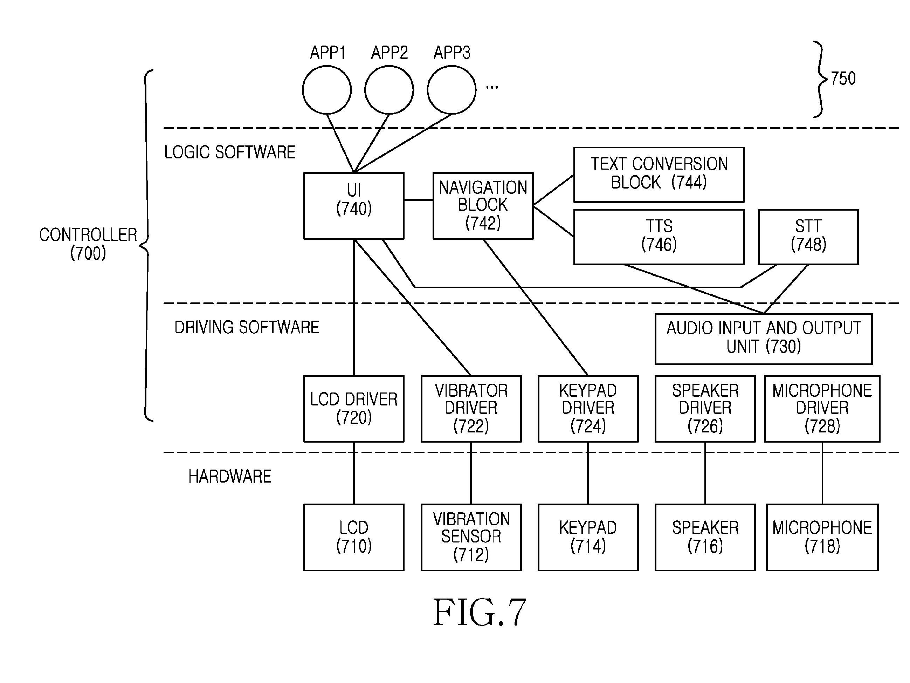

FIG. 7 illustrates a configuration of an interface device of a mobile communication terminal according to an embodiment of the present invention.

Referring to FIG. 7, the mobile communication terminal includes logic software, driving software, and hardware. The logic software and the driving software may be configured as one controller 700. The hardware includes a Liquid Crystal Display (LCD) 710, a vibration sensor 712, a keypad 714, a speaker 716, and a microphone 718. The driving software includes an LCD driver 720, a vibrator driver 722, a keypad driver 724, a speaker driver 726, a microphone driver 728, and an audio input and output unit 730. The logic software includes a User Interface (UI) 740, a navigation block 742, a text conversion block 744, a TTS 746, and a Speech To Text (STT) 748.

The present invention is not limited to function blocks included in the logic software, the driving software, and the hardware, and an additional function block (e.g., a transmission and reception block) may be further included.

The logic software controls an overall operation of the mobile communication terminal. Particularly, the logic software performs a control operation to provide an audible interface to a user.

The UI 740 provides an interface between the user and the mobile communication terminal. When the user performs input through a touch screen, the UI displays an operation corresponding to the input through the LCD 710.

The navigation block 742 navigates objects in a corresponding display region based on input of the keypad 714 (e.g., the upper and lower control buttons 101 or the selection button 103 of FIG. 1) or input from the UI 740. The navigation block 742 provides a text corresponding to the corresponding object to the TTS 746 and provides an image corresponding to the corresponding object to the text conversion block 744. When the corresponding object includes a text in the image, the text conversion block 744 analyzes the text from the image and provides the analyzed information to the TTS 746.

The TTS 746 converts the text into a voice and provides the converted voice to the audio input and output unit 730. The STT 748 converts a voice from the audio input and output unit 730 into a text and provides the converted text to the UI 740. The audio input and output unit 730 outputs a voice to the speaker 716 through the speaker driver 726 or provides a voice from the microphone 718 to the STT 748.

The driving software controls an interface among an Operating System (OS), an application program, and the hardware. For example, the LCD driver 720 controls an interface among the OS, an application program, and the LCD 710. The vibrator driver 722 controls an interface among the OS, an application program, and the vibration sensor 712. The keypad driver 724 controls an interface among the OS, an application program, and the keypad 714. The speaker driver 726 controls an interface among the OS, an application program, and the speaker 718. The microphone driver 728 controls an interface among the OS, an application, and the microphone 718.

The LCD 710 displays state information generated while the mobile communication terminal is operated, a limited number of characters, and large volumes of moving and still displays. The vibration sensor 712 converts an electric signal (e.g., a touch or an incoming signal) into vibration. The keypad 714 includes numeral key buttons of '0' to '9' and a plurality of function keys, such as a menu button, a cancel button (delete key), an OK button, a talk button, an end button, and an Internet access button. The keypad 714 provides key input data corresponding to a key pushed by the user to the controller 700. The speaker 716 converts an electric signal from the controller 700 into a voice signal and outputs the converted voice signal. The microphone 718 converts a voice signal into an electric signal and provides the converted electric signal to the controller 700.

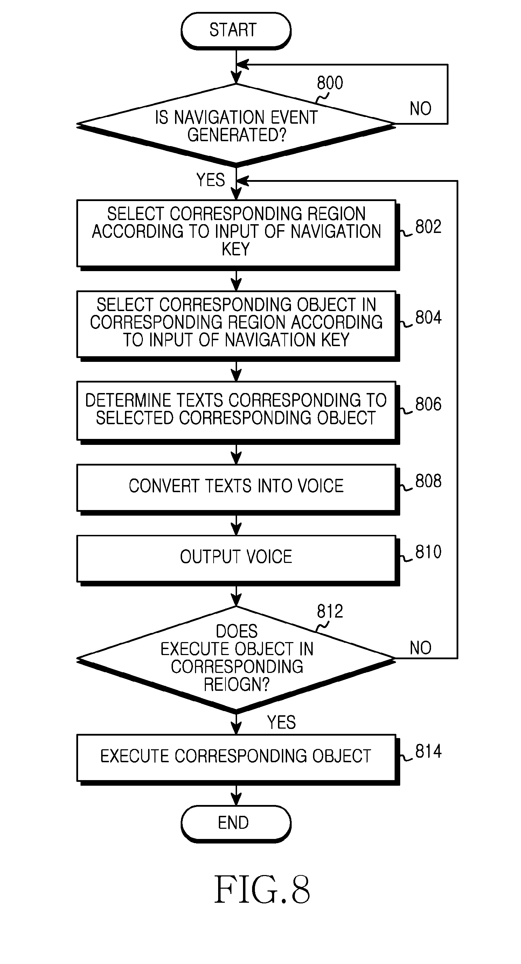

FIG. 8 illustrates an interface method of a mobile communication terminal according to an embodiment of the present invention.

Referring to FIG. 8, the controller 700 of FIG. 7 determines whether a navigation event is generated in step 800. When the navigation event is generated, i.e., if a user pushes the upper and lower control buttons 101, the controller 700 proceeds to step 802.

The controller 700 selects a corresponding region of a display according to input of a navigation key (i.e., the upper and lower control buttons 101) in step 802. The controller 700 selects a corresponding object of the corresponding region according to the input of the navigation key in step 804.

For example, if the user pushes the upper and lower control buttons 101 one by one in FIG. 3, a focus is moved from a left object to a right object of a corresponding region. When the user wants to move the focus to an object of a next region, he or she double-clicks the upper and lower control buttons 101.

In step 806, the controller 700 determines texts corresponding to the corresponding object selected, in step 804.

The controller 700 converts the texts or contents corresponding to the selected corresponding object using a TTS function in step 808. For example, when the focus is on an object for displaying signal strength of the display region 300 in FIG. 3, texts or contents corresponding to the object for displaying the signal strength are converted into voice, which may be stored and maintained in a memory in advance. In this case, a process of reading out a voice file corresponding to a corresponding object from the memory is needed instead of a TTS function in step 808.

The controller 700 outputs the converted voice and the voice corresponding to the object, which is read out from the memory, in step 810.

When the user wishes to execute the object in the corresponding region using the selection button 103 of FIG. 1 in step 812, the controller 700 proceeds to step 814 and executes the corresponding object.

If the user does not wish to execute the object in the corresponding region, the controller 700 returns to step 802. The controller 700 converts texts or voices corresponding to a next object in the corresponding region or a certain object in a next corresponding region into voice and outputs the converted voice through the speaker.

Thereafter, the procedure is ended.

As described above, when the user moves objects using a directional key of a smart phone, the present invention provides an audible interface and enables persons who are elderly, blind or have compromised vision to conveniently use a communication device, such as a smart phone, by converting contents or texts corresponding to a corresponding object into voice outputted to the user.

While the present invention has been particularly shown and described with reference to embodiments thereof, it will be understood by those skilled in the art that various changes in form and details may be made therein without departing from the spirit and scope of the present invention as defined by the appended claims.

## Claims

1. An interface device for a mobile communication terminal, the interface device comprising:
a directional key for navigating an object in a corresponding region;
a controller for determining texts or contents corresponding to the object in the corresponding region;
a converter for converting the texts or the contents corresponding to the object in the corresponding region into voice; and
a speaker for outputting the converted voice corresponding to the object in the corresponding region.

2. The interface device of claim 1, further comprising a selection key for executing the corresponding object.

3. The interface device of claim 1, further comprising a memory for storing the converted voice corresponding to the object in the corresponding region.

4. The interface device of claim 1, wherein, when the directional key is sequentially pushed a number of times, a focus is moved from the corresponding region to a next region.

5. An interface method of a mobile communication terminal, the interface method comprising:
navigating an object in a corresponding region using a directional key;
determining texts or contents corresponding to the object in the corresponding region;
converting the texts or the contents corresponding to the object in the corresponding region into voice; and
outputting the converted voice corresponding to the object in the corresponding region.

6. The interface method of claim 5, further comprising executing the corresponding object using a selection key.

7. The interface method of claim 5, further comprising storing the converted voice corresponding to the object in the corresponding region.

8. The interface method of claim 5, wherein, when the directional key is sequentially pushed a number of times, a focus is moved from the corresponding region to a next region.

9. An interface device for a mobile communication terminal, the interface device comprising:
a display unit for displaying at least one object;
a controller for detecting a touched object among the at least one object; and
a speaker for outputting voice corresponding to the touched object.

10. The interface device of claim 9, further comprising a converter for converting texts or contents corresponding to the touched object into voice.

11. An interface method of a mobile communication terminal, the interface method comprising:
displaying at least one object;
detecting a touched object among the at least one object; and
outputting voice corresponding to the touched object.

12. The interface method of claim 11, further comprising converting texts or contents corresponding to the touched object into voice.

13. The interface device of claims 1 and 9 and the interface method of claims 5 and 11, wherein the object includes a data and an operation related to the data.

14. The interface device of claims 1 and 9 and the interface method of claims 5 and 11, wherein a display of the mobile communication terminal is classified into a plurality of regions and wherein each of the plurality of regions includes a plurality of objects.

15. The interface device of claim 9 and the interface method of claim 11, wherein the voice is for explanation with respect to the touched object.
